(19) Europäisches Patentamt
European Patent Office
Office européen des brevets

(11) **EP 4 328 686 A1**

(12) **EUROPEAN PATENT APPLICATION**

(43) Date of publication:
**28.02.2024  Bulletin 2024/09**

(21) Application number: **22192148.9**

(22) Date of filing: **25.08.2022**

(51) International Patent Classification (IPC):
***G05B 23/02*** *(2006.01)*

(52) Cooperative Patent Classification (CPC):
**G05B 23/024**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventor: **Lebacher, Michael**
**84513 Töging am Inn (DE)**

(74) Representative: **Siemens Patent Attorneys**
**Postfach 22 16 34**
**80506 München (DE)**

(54) **DETECTING ANOMALIES IN SENSOR OUTPUT**

(57)    Various examples of the disclosure pertain to detecting anomalies in a time series of measurement vectors of at least one sensor (161, 162, 163) observing a scene (151). Markov state transitions probabilities are considered between a time increment of the time series, for each feature of the measurement vectors.

FIG 2

EP 4 328 686 A1

**Description**

TECHNICAL FIELD

Various examples of the disclosure generally pertain to detecting an anomaly in a sensor output of at least one sensor based on time series measurement vectors obtained from the at least one sensor.

BACKGROUND

Sensors are used in all kinds of heavy machinery and equipment and, therefore, highly relevant for many different technological fields. Sensors observe a scene and provide measurement data. Multiple different features of the scene can be observed by at least one sensor, e.g., pressure, vibration, temperature, movement, etc..

One especially important application field of sensors is monitoring the functionality of heavy machinery such as pumps, turbines, die casting machines, operating devices etc. To do so, sensors are installed on these machines and measure different physical conditions such as current, temperature, pressure, position which enables monitoring of the state of the system as a whole. Respective features are provided as measurement values. Such measurement values can be represent in a measurement vector, a dimensionality of which corresponds to the number of features. If the machinery is subject to different damages or malfunction, the measurement values show suspicious patterns and anomalies in the data which allow to learn machine learning algorithms for detecting these anomalies.

However, there are multiple problems related to detecting anomalies from sensor output.

Since time series are a complex data structure, the underlying algorithms tend to be complex themselves and are therefore often not human-understandable, often called black-box algorithms. This means that it is not possible to understand how the model behaves. This leads to obstacles for the developers to build a better and more robust models, to detect the anomalies.

It also leads to problems with the detection of root-causes of anomalies and consequently to a lack of trust and acceptance. Furthermore, often it is only possible to observe the normal state of the scene and there are no examples of abnormal behavior at hand. This makes it difficult to parameterize or specifically train a model.

Further, the output of a model may be required to be interpretable in the sense that valid actions can be derived. Many models routinely used to interpret time series data use output scores that are unbounded and have not probabilistic interpretation, hence neglecting the uncertainty of complicated industrial processes.

Techniques are known to detect malfunctioning of a sensor. Such prior art techniques are summarized below.

Cluster-based solutions: The most simplistic and basic approach towards unsupervised anomaly detection are clustering-based algorithms. I.e., all algorithms that try to learn clusters or even distributions of similar datapoints. Then, when measuring how the data regularly behaves (i.e., which clusters are typical for normal operation of the machinery), one can define anomaly scores, by measuring the distance of newly incoming points from the regular clusters or the probability of new points belonging to the distribution of those clusters. These approaches are typically easy to implement, computationally efficient and transparent. Hence, they satisfy most requirements from above, however their simplistic nature typically prevents them from coping with high dimensional time series measurement vectors, their dynamics, and interdependencies.

This is because they cannot handle time-dependencies very well. And hence they are often not suited for complex high dimensional time series data. Also, the mixture of continuous and categorical information is often an issue.

Prediction-based solutions: Another well-known approach toward unsupervised anomaly detection is the use of forecast models. Generally, the idea is to predict the state of a system at time point t based on the information from the previous time points $t$-1,... If there are one or more forecast models for the features of the measurement vector, one can predict into the future and compare the forecasted values with the realized ones. If they deviate strongly, it is concluded that an anomaly is present. Typically, these models either can cope with complex data structures (e.g., with deep neural networks) or they are interpretable. Hence, it is hard for this approach to satisfy provide interpretability of the results when handling complex data structures, such as high dimensional measurement vectors. Furthermore, oftentimes it is not possible to provide an anomaly score that reflects uncertainty regarding the presence of the anomaly in a bounded result space.

Isolation Forest: The Isolation Forest borrows its main ideas from the Random Forest and segments the input data space randomly. Basically, it acts on the assumptions that anomalies can more easily be separated from the rest of the data than regular data points. However, the Isolation Forest hast no explicit time dynamics and no real probabilistic interpretation. Also, interpretability in general is here an issue.

Autoencoder: The autoencoder comes from the deep learning research community and builds on the idea that a specially structured neural network can capture in an encoding layer the most relevant information of a normal state. Hence, the idea is to provide data to the autoencoder, which then encodes and decodes the data. If the reconstructed (decoded) data is similar to the input data, one assumes that this is the normal state. Otherwise, if the reconstruction is bad, an anomaly score can be constructed from this deviation. There exist many variants, and especially versions that can cope high complex high dimensional time-dependent structures (combinations of long-short-term-memory neural networks with Autoencoders). Furthermore, it is possible to use loss functions that are likelihood-based which enables a probabilistic interpretation of the output. However, their big drawback is the lack of interpretability. Furthermore, these methods are mostly not computationally efficient.

SUMMARY

Accordingly, a need exists for advanced techniques of detecting anomalies in sensor outputs of sensors. A need exists for techniques that mitigate or overcome at least some of the above-identified drawbacks and restrictions.

This need is met by the features of the independent claims. The features of the dependent claims define embodiments.

Hereinafter, techniques are disclosed that facilitate detecting anomalies in a sensor output of at least one sensor.

According to examples, an estimated probability distribution of time series of measurement vectors can be considered and it can be checked whether new measurement vectors of the time series are compatible with the expected probability distribution.

Specifically, transition probabilities in a Markov model of Markov states can be considered for judging the probability of a state transition reflected by the time series of measurement vectors between two subsequent time increments.

A computer-implemented method includes obtaining a time series of measurement vectors of at least one sensor. The at least one sensor observes a scene. For instance, the scene may correspond to a technical apparatus or to a machinery.

The measurement vectors can have a certain dimensionality. The dimensionality defines the number of features. Each measurement vector of the time series of measurement vectors includes values for multiple features obtained at a respective time increment of multiple time increments of the time series.

For instance, the features may be selected from the group including: temperature; pressure; vibration; sound; movement; number of objects; velocity of one or more objects; etc. to give just a few examples.

The computer-implemented method can further include, for each feature of the multiple features: loading a respective pre-trained feature-specific model. Thus, the count of pre-trained feature-specific models can correspond to the dimensionality of the measurement vectors of the timeseries.

The feature-specific models can be unsupervised models that calculate the likelihood of a certain state transition. As such, they can be referred to as anomaly detection models. As a general rule, prior art models can be used for the purpose of the subject disclosure.

The computer-implemented method may further include, for each feature of the multiple features: applying, to the time series of measurement vectors, the respective pre-trained feature-specific model for at least one time increment of the multiple time increments. Thereby, respective partial transition probability values between respective Markov states of the respective feature are obtained. Accordingly, the models can predict the transition probability values for the various feature values.

It is then possible to combine the partial transition probability values across the multiple features for each one of the at least one treatment, to thereby obtain a respective join transition probability. It is then possible to detect an anomaly in the timeseries of the measurement vectors based on the one or more join transition probabilities obtained for the at least one time increment.

Such techniques are able to cope with almost arbitrary high dimensional measurement vectors, since the Markov assumption allows to reduce time series of arbitrary length into separate transition probabilities for the various time increments. Furthermore, a very high number of different time series with different data types is possible because the flexibility in constructing the individual feature-specific models. The algorithm works on the basis of normal data without the need for anomalies in the training dataset, hence it is unsupervised.

According to various examples, the method may further include, responsive to detecting the anomaly: identifying at least one feature of the multiple features as a root cause for the anomaly based on the partial transition probability values of the features of the multiple features obtained for the at least one command. It would be possible to compare the partial transition probability values with each other and select the lowest partial transition probability value. The associated feature can be assumed to identify the root cause.

Thus, it is possible to understand which sensor of multiple sensors or which feature of multiple features is causal for an anomaly (root cause).

Sometimes, it is possible that the pre-trained feature-specific models are interpretable.

In such a scenario, the method may further include, responsive to identifying the at least one feature as root cause: analyzing a model output of the respective pre-trained feature-specific model for one or more time increments of the multiple increments, to explain the anomaly.

By identifying the root cause and possibly explaining a reason for the root cause of the anomaly, tailored interaction with the scene becomes possible. For instance, predictive maintenance of a tailored maintenance would be possible for a respective machinery.

As a general rule, an anomaly can pertain to an unexpected state of the scene. For instance, the anomaly can be caused by an unexpected operation of a technical apparatus interacting with the scene. The anomaly may be caused by a malfunctioning of the respective sensor.

According to examples, the multiple features can include, both, one or more categorial features, as well as one or more continuous features. Categorial features can correspond to the output of a classification, i.e., a discrete set of allowed values. Continuous features can correspond to the output of a regression task, i.e., a continuous result space. by using multiple feature-specific models to obtain respective partial transition probability values, the individual feature-specific models can be flexibly set up to deal with, both, categorial features, as well as continuous features.

For instance, the one or more pre-trained feature-specific models associated with the one or more continuous features may be selected from the group including: linear regression models; generalized linear regression model; and neural network model.

On the other hand, the one or more pre-trained feature-specific models associated with the one or more categorial features may be selected from the group including: logistic regression model; Poisson distribution model; and neural network model.

This enables to employ "off-the-shelve" available models in the current framework. Interpretable models may be used.

It is possible that some of the pre-trained feature-specific models are simpler than other feature-specific models. Specifically, it is possible that different ones of the pre-trained feature-specific models are dependent on different subsets of the multiple features. This means that for instance, for a total set of features A,B,C,D, the feature-specific model for feature A may be dependent on features A,B,C,D, while the feature-specific model for feature C may only be dependent on features C, D.

This reduces the computational efforts and simplifies the individual models.

In case the multiple features include one or more categorial features and one or more continuous features, it would be possible that the one or more pre-trained feature-specific models associated with the one or more categorial features are dependent on fewer features than the one or more pre-trained feature-specific models associated with the one or more continuous features.

For instance, the feature-specific model for continuous feature A may be dependent on features A,B,C,D, while the feature-specific model for categorial feature C may only be dependent on features C,D.

Typically, the computational load for models associated with categorial features is higher than the computational load for models associated with continuous features. Thus, by such techniques the overall computational load can be lowered.

In some scenarios, it would be possible that any arbitrarily selected pair of pre-trained feature-specific models is dependent on different counts of multiple features. This means that if there are four pre-trained feature-specific models for features A,B,C,D, then one model is dependent on four features, a further model is dependent on three features, a further model is dependent on to features and the last model is dependent on only a single feature.

This helps to reduce the overall number of required dependencies and thus reduces the overall computational load.

As will be appreciated, all pre-trained features-specific models are dependent on at least one feature of the multiple features.

By using multiple pre-trained feature-specific models, they can be applied in parallel. Parallel computing can be exploited to reduce the computational time.

For instance, if an anomaly is detected, a warning can be triggered. It would also be possible to transition a technical apparatus that interacts with the scene based on measurement vectors into a safe state.

This helps to avoid unsafe states of the scene. Malfunctioning can be detected early on. Harm to the environment can be prevented.

It is to be understood that the features mentioned above and those yet to be explained below may be used not only in the respective combinations indicated, but also in other combinations or in isolation without departing from the scope of the invention.

BRIEF DESCRIPTION OF THE DRAWINGS

FIG. 1      is a flowchart of a method according to various examples.

FIG. 2   schematically illustrates a system according to various examples.

DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of identifying anomalies in the sensor output of at least one sensor are disclosed. The at least one sensor can observe a scene. For instance, a technical apparatus may interact with the scene. For instance, the scene could pertain to a gas turbine and the gas turbine may be equipped with multiple sensors for measuring vibration, temperature, etc. It would be possible that the scene pertains to a train wagon that is equipped with multiple sensors. The scene could pertain to a factory hall and multiple robots may interact with equipment at the factory hall.

The techniques are based on fundamental probability theory, providing a fully probabilistic interpretation of anomaly scores. The techniques are flexible in that it can operate based on any model that provides probability mass functions or densities.

This is explained next (notation: scalar values are not bold and small letters; small letters, bold pertain to a realization of a random variable that is represented in bold using capital letter).

The following setting is assumed: a ($T \times k$) data matrix $\boldsymbol{x}$ of regular scene behavior is observed. This is a time series of measurement vectors.

The time series of measurement vectors may contain the following information:

Continuous sensor measurements   $x^c_{i,t} \in \mathbb{R}, i = 1, \dots, k^c, t = 1, \dots, T$

Categorical, or binary measurements   $x^b_{i,t} \in \{0, 1, \dots, B_i\}, i = 1, \dots, k^b, t = 1, \dots, T$

In other words, some features can be categorial features, and other features can be continuous features.

Hence, two different data structures are modeled, a set of continuous time series $x^c_{i,t}$ as well as a set of categorical events, encoded as a categorical or binary time series $x^b_{i,t}$.

Together it holds, that $k^c + k^b = k$ and $t = 1, \dots, T$ is the same for all observations, where t represents an arbitrary time unit (e.g., seconds, hours, etc.)

Next, the joint distribution of the random matrix $\boldsymbol{X}$ is modeled. The data matrix $\boldsymbol{x}$ is viewed as a realization of this random matrix. This enables to probe whether the respective state of the scene described by the time series of measurement vectors is likely or unlikely, i.e., corresponds to an anomaly.

In detail, to incorporate time dynamics, Markov independence of order $O$ can be assumed. Without loss of generality, it is assumed here that $O = 1$, for illustrative purposes. This allows to simplify the joint distribution as follows

$$P(X = x) = P(X_{t=T} = x_{t=T}|X_{t=T-1} = x_{t=T-1}, \dots, X_{t=1} = x_{t=1})$$
$$* P(X_{t=T-1} = x_{t=T-1}|X_{t=T-2} = x_{t=T-2}, \dots, X_{t=1} = x_{t=1}) * \dots$$
$$* P(X_{t=2} = x_{t=2}|X_{t=1} = x_{t=1}) * P(X_{t=1} = x_{t=1})$$
$$= P(X_{t=T} = x_{t=T}|X_{t=T-1} = x_{t=T-1})$$
$$* P(X_{t=T-1} = x_{t=T-1}|X_{t=T-2} = x_{t=T-2}) * \dots$$
$$* P(X_{t=2} = x_{t=2}|X_{t=1} = x_{t=1}) * P(X_{t=1} = x_{t=1})$$

where the first equality follows from the multiplication theorem of probability and the second is a direct consequence of assuming first-order Markov independence. This Equation corresponds to the probability that the random variable $X$ takes the value of the instance $x$. Thus, it measures how likely the occurrence of that particular time series of measurement vectors $x$ is.

Hence, to model the joint distribution of the whole data matrix, the $T$ multivariate transition distributions

$$P(X_{t=T-\tau} = x_{t=T-\tau}|X_{t=T-\tau-1} = x_{t=T-\tau-1}) \, for \, \tau = 0, \dots T-1$$

are modeled.

Here it is assumed that all transition probabilities can be represented by a joint model, parametrized with parameters $\theta$, such that the model

$$P(X_{t=T-\tau} = x_{t=T-\tau}|X_{t=T-\tau-1} = x_{t=T-\tau-1}; \theta)$$

holds for all $\tau$. Next, a model for a high-dimensional random vector that is composed of continuous and discrete random variables is constructed. To do so, the multiplication theorem of probability can be applied again, to factorize this mixed joint density:

$$P(X_{t=T-\tau} = x_{t=T-\tau}|X_{t=T-\tau-1} = x_{t=T-\tau-1}) =$$
$$f_{X^c_{1,t=T-\tau}|X^c_{2,t=T-\tau}, \dots, X^c_{k^c,t=T-\tau}, X^b_{1,t-\tau}, \dots, X^b_{k^b,t-\tau}, X_{t=T-\tau-1}}\left(x^c_{1,t=T-\tau}\middle|x^c_{2,t=T-\tau}, \dots, x^c_{k^c,t=T-\tau}, x^b_{1,t-\tau}, \dots, x^b_{k^b,t-\tau}, X_{t=T-\tau-1}; \theta_1\right) *$$
$$f_{X^c_{2,t=T-\tau}|X^c_{3,t=T-\tau}, \dots, X^c_{k^c,t=T-\tau}, X^b_{1,t-\tau}, \dots, X^b_{k^b,t-\tau}, X_{t=T-\tau-1}}\left(x^c_{2,t=T-\tau}\middle|x^c_{3,t=T-\tau}, \dots, x^c_{k^c,t=T-\tau}, x^b_{1,t-\tau}, \dots, x^b_{k^b,t-\tau}, X_{t=T-\tau-1}; \theta_2\right) *$$

$$\dots * p\left(X^b_{1,t-\tau} = x^b_{1,t-\tau}\middle|X^b_{2,t-\tau} = x^b_{2,t-\tau}, \dots, X^b_{k^b,t-\tau} = x^b_{k^b,t-\tau}, X_{t=T-\tau-1}; \theta_{k^c+1}\right) *$$
$$p\left(X^b_{2,t-\tau} = x^b_{2,t-\tau}\middle|X^b_{3,t-\tau} = x^b_{3,t-\tau}, \dots, X^b_{k^b,t-\tau} = x^b_{k^b,t-\tau}, X_{t=T-\tau-1}; \theta_{k^c+2}\right) * \dots * p(X^b_{k^b,t-\tau} =$$
$$x^b_{k^b,t-\tau}|X_{t=T-\tau-1}; \theta_k) \quad (1)$$

Here, probability mass functions for discrete random variables $X$ and $Y$ are denoted as $p(Y = y|X = x)$ and probability density functions for continuous random variables $X$ and $Y$ as $f_{X|Y}(y|X)$.

The central insight from equation (1) is that it is possible model the partial transition probabilities for all $k$ measurements/features from time point $T\text{-}\tau\text{-}1$ to $T\text{-}\tau$ (i.e., for a single time increment of the time series) simply with univariate conditional submodels, i.e., pre-trained feature-specific models. Hence, all terms from equation (1) can be modelled with likelihood-based approaches for continuous valued response (e.g., normal distribution in a linear regression case, gamma distribution in a generalized linear regression case, Neural networks with continuous valued density as loss function,.) and for categorical responses (e.g., logistic regression in the binary case, Poisson distribution for count data, neural network with categorical cross entropy, etc.). As can be seen from Eq. 1, different ones of the pre-trained feature-specific models are dependent on different subsets of the multiple features.

Eq. 1 may be re-calculated for multiple time increments, if desired.

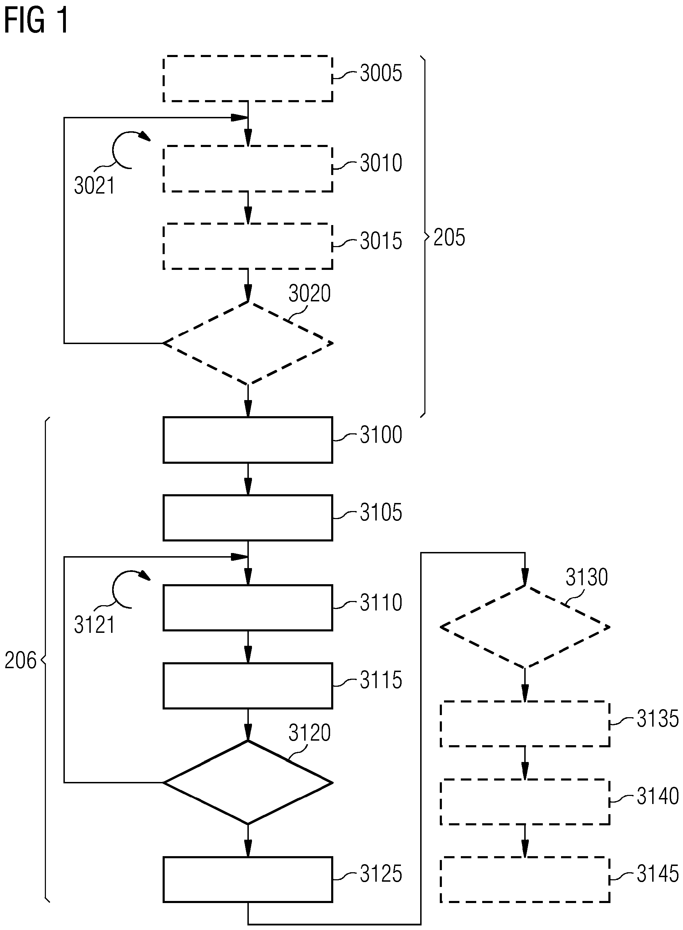

This insight, together with the theoretical derivations from above justify the following computer-implemented method as depicted in FIG. 1.

FIG. 1 is a flowchart of a method. Optional boxes are shown with dashed lines.

Box 3005, Initialization: Define the Markov Order $O$. This could also be predefined. Thus, box 3005 is optional.

Box 3010, select a current feature, i.e., select *i* from {1,...*k*}.

Box 3015, learn the respective feature-specific model. For instance, If feature *i* is categorical: Learn an appropriate model (e.g., logistic regression) for labels $x^b_{i,t=T-\tau}$ and features ($x_{i+1,t=T-\tau},..., x_{k,t=T-\tau}, \boldsymbol{x}_{t=T-\tau-1},...,\boldsymbol{x}_{t=T-\tau-O}$). And if feature *i* is continuous: Learn an appropriate model (e.g., linear regression) for labels $x^c_{i,t=T-\tau}$ and features ($x_{i+1,t=T-\tau},..., x_{k,t=T-\tau}, \boldsymbol{x}_{t=T-\tau-1},...,\boldsymbol{x}_{t=T-\tau-O}$). Save the learned model and check at box 3020 whether all features have been processed, otherwise execute a loop 3021.

Boxes in 205 correspond to the training. Sometimes, the pre-trained feature-specific models can be already available, so that 205 is generally optional.

Then, inference continues, at 206. At box 3100 the pre-trained feature-specific models are loaded for all features *i* = 1...*k*.

At box 3105, a time series of measurement vectors is obtained. The measurement vectors are based on the sensor output of at least one sensor that observes a scene. The matrix *x* is obtained, see above.

To calculate the joint distribution of an event at time point t, apply equation (1). This means that at box 3110 a current feature is selected, i.e., select *i* from {1,...,*k*}. At box 3115 the respective partial transition probability value between the Markov states for the time increment from *t*-1 to *t* is calculated based on the respective model, i.e., the individual terms of the factorization of Eq. 1.

At box 3120 it is checked whether there is a further feature for which the partial transition probability value is to be calculated. If yes, loop 3121 is executed; else, at 3125 all partial probability values are combined, by forming the respective multiplication according to the factorization of Eq. 1. This yields the joint transition probability.

Loops 3121 may be re-executed for multiple time increments (outer loop). It would be possible to combine the joint transition probabilities also across the multiple time increments.

At box 3130 it can then be judged whether an anomaly is present in the time series. The joint transition probability could be compared with a predetermined threshold to do so. Anomalies / outliers are by definition rare, $P(\boldsymbol{X}_{t=T-\tau}=\boldsymbol{x}_{t=T-\tau}|\boldsymbol{X}_{t=T-\tau-1})$ gives a probabilistic measure for evaluating whether the current state of the machine is likely or unlikely and hence a direct measure for anomalies.

If yes, the method commences at box 3135 where a warning may be output or any technical apparatus or system interacting with the scene is transitioned to a safe state.

Some notes on computational complexity: Since all *k* pre-trained feature specific models can be learned independently, the algorithm above can be parallelized completely. I.e., loops 3021 and 3121 can be applied in parallel.

The number of features to consider decreases from feature to feature due to Eq. (1). I.e., any arbitrarily selected pair of the pre-trained feature-specific models is dependent on a different count of the multiple features. E.g., if there are 10 features and a Markov order of *O*=1, the first pre-trained feature specific model has 19 features to consider, the second one 18 features,... until the tenth model only has 10 features.

Equation (1) is independent of the ordering of the features; hence it might be beneficial to set more complex models (e.g., for categorical variables) to the end of the factorizations which allows for simpler models with less features. Thus, one or more pre-trained feature-specific models associated with one or more categorial features can be dependent on fewer features than one or more pre-trained feature-specific models associated with one or more continuous features. Even if there are many models to learn, the individual models may be simple ones such that very high dimensions are copeable. Hence the training can be considered to be very efficient.

At box 3140, it would be possible to identify at least one feature of the multiple features as the root cause for the anomaly. This can be based on the partial transition probability values associated with the factors of the factorization of Eq. 1. In other words, because of the decomposition according to Eq. (1), the measure is interpretable, and it is possible to track down exactly those features that are responsible for the anomaly. Further, if the sub-models are interpretable themselves, one can interpret the reason for an outputted anomaly at box 3145.

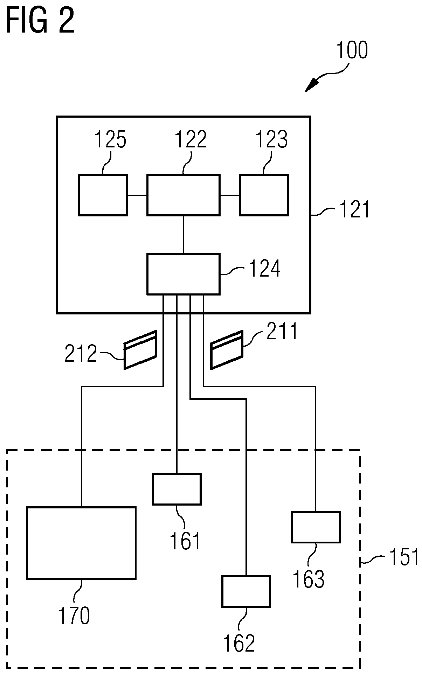

FIG. 2 schematically illustrates a system 100. The system 100 includes a scene 151. A technical apparatus 170 - e.g., a gas turbine, a train wagon, etc., is deployed in the scene 151. Multiple sensors 161-163 observe the scene. For instance, measurement values regarding the technical apparatus 170 may be provided. Sensor measurement data 211 is provided by the sensors 161-163 to a computing device 121. Each sensor 161-163 may observe one or more respective features. Each sensor 161-163 may provide a respective time series of the measurement data 211. Based on this, it is possible to construct a time series of measurement vectors that include all features from all sensors 161-163.

The computing device 121 includes a processor 122 that can obtain the time series of measurement vectors via an interface 124. The processor 122 can load program code from a memory 123 of the computing device 121 and execute the program code. The processor, upon executing the program code, can perform techniques as disclosed herein, e.g., in connection with FIG. 1. Then, the processor 122 can provide control data 212 to the technical apparatus 170, e.g., responsive to detecting an anomaly it would be possible to transition the technical apparatus 170 into a safe state. A warning may be output via an HMI 125.

Summarizing, techniques have been disclosed that facilitate detecting anomalies in a time series of measurement vectors obtained from at least one sensor. The joint probability for a single time increment is determined, which reduces the complexity. This joint probability is further broken down into feature-specific partial transition probabilities between the two respective Markov states associated with the time increment. This further reduces the complexity for the individual models.

The underlying algorithm satisfies the following conditions: It is able to cope with high dimensional time series data, their dynamics, and interdependencies. It is computationally efficient, even for high dimensional data (long times series with many sensors). It is transparent and interpretable in the sense that it is possible to determine which features triggers a given anomaly, i.e., is the root cause. It is unsupervised, i.e., the training does not require information about actual anomalies. It is probabilistic in the sense that the anomaly score reflects uncertainty about the system and is bounded. It can handle continuous and categorical measurements.

**Claims**

1. A computer-implemented method, comprising:

   - obtaining (3105) a time series of measurement vectors of at least one sensor (161, 162, 163) observing a scene (151), each measurement vector of the time series of measurement vectors comprising values for multiple features obtained at a respective time increment of multiple time increments of the time series,
   - for each feature of the multiple features: loading (3100) a respective pre-trained feature-specific model,
   - for each feature of the multiple features: applying (3115), to the time series of measurement vectors, the respective pre-trained feature-specific model for at least one time increment of the multiple time increments, to obtain respective partial transition probability values between respective Markov states of the respective feature,
   - combining (3125) the partial transition probability values across the multiple features for each one of the at least one time increment, to obtain a respective joint transition probability, and
   - detecting (3130) an anomaly in the time series of the measurement vectors based on the one or more joint transition probabilities obtained for the at least one time increment.

2. The computer-implemented method of claim 1, further comprising:

   - responsive to detecting the anomaly, identifying (3140) at least one feature of the multiple features as a root cause for the anomaly based on the partial transition probability values of the features of the multiple features obtained for the at least one time increment.

3. The computer-implemented method of claim 2, further comprising:

   - responsive to identifying the at least one feature as the root cause: analyzing (3145) a model output of the respective pre-trained feature-specific model for one or more time increments of the multiple increments, to explain the anomaly.

4. The computer-implemented method of any one of the preceding claims,
   wherein the multiple features comprise one or more categorial features and one or more continuous features.

5. The computer-implemented method of claim 4,
   wherein one or more of the pre-trained feature-specific models associated with the one or more continuous features are selected from the group comprising: linear regression model; generalized linear regression model; and neural network model.

6. The computer-implemented method of claim 4 or 5,
   wherein one or more of the pre-trained feature-specific models associated with the one or more categorial features are selected from the group comprising: logistic regression model; Poisson distribution model; and neural network model.

7. The computer-implemented method of any one of the preceding claims,
   wherein different ones of the pre-trained feature-specific models are dependent on different subsets of the multiple features.

8.  The computer-implemented method of claim 7,

    wherein the multiple features comprise one or more categorial features and one or more continuous features, wherein the one or more pre-trained feature-specific models associated with the one or more categorial features are dependent on fewer features than the one or more pre-trained feature-specific models associated with the one or more continuous features.

9.  The computer-implemented method of claim 7 or 8, wherein any arbitrarily selected pair of the pre-trained feature-specific models is dependent on different count of the multiple features.

10. The computer-implemented method of any one of claims 7 to 9, wherein all pre-trained feature-specific models are dependent on at least one feature of the multiple features.

11. The computer-implemented method of any one of the preceding claims, wherein the pre-trained feature-specific models are applied in parallel for the multiple features.

12. The computer-implemented method of any one of the preceding claims, further comprising:

    - responsive to detecting the anomaly: triggering (3135) a warning.

13. The computer-implemented method of any one of the preceding claims, further comprising:

    - responsive to detecting the anomaly: transitioning (3135) a technical system interacting with the scene based on the measurement vectors of the at least one sensor into a safe state.

14. A computer program comprising program code that is executable by at least one processor, wherein the at least one processor, upon executing the program code, performs the method of any one of claims 1 to 13.

15. A computing device (121) comprising at least one processor (122) and memory (123), wherein the at least one processor is configured to load program code from the memory and to execute the program code, wherein the at least one processor, upon executing the program code, is configured to perform the method of any one of claims 1 to 13.

FIG 1

FIG 2

Europäisches
Patentamt

European
Patent Office

Office européen
des brevets

# EUROPEAN SEARCH REPORT

Application Number

EP 22 19 2148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/219467 A1 (BRITISH TELECOMM [GB]) 4 November 2021 (2021-11-04) * page 6, line 7 - page 16, line 32 * * figures 1-3 * ----- | 1-15 | INV. G05B23/02 |

TECHNICAL FIELDS
SEARCHED      (IPC)

G05B

The present search report has been drawn up for all claims

| Place of search | Date of completion of the search | Examiner |
|---|---|---|
| The Hague | 9 February 2023 | Simigliani, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 2148

09-02-2023

| Patent document cited in search report | Publication date | Patent family member(s) | | Publication date |
|---|---|---|---|---|
| WO 2021219467 A1 | 04-11-2021 | EP | 4143690 A1 | 08-03-2023 |
| | | WO | 2021219467 A1 | 04-11-2021 |

For more details about this annex : see Official Journal of the European Patent Office, No. 12/82